# EUROPEAN PATENT APPLICATION

(11) **EP 4 685 880 A1**
(43) Date of publication of application: **28.01.2026**
(21) Application number: 25172516.4
(22) Date of filing: 25.04.2025
(51) Int. Cl.: H01M 4/525, H01M 10/0525, H01M 10/0567, H01M 10/42

(54) **LITHIUM-ION BATTERY ELECTROLYTE AND APPLICATION THEREOF**

(30) Priority: 08.07.2024 CN 202410913638
(71) Applicant: AESC Japan Ltd., Yokohama-Shi, Kanagawa 220-0012 (JP)
(72) Inventor: YU, Le, Pudong New Area Shanghai, 201315 (CN); WANG, Ziyuan, Pudong New Area Shanghai, 201315 (CN)
(74) Representative: Becker, Eberhard

(57) **Abstract**

The invention provides a lithium-ion battery electrolyte and an application thereof, wherein the lithium-ion battery electrolyte includes at least: a non-aqueous solvent; a lithium salt; an additive; and hydrogen fluoride, wherein the additive includes a substance represented by a following general formula (I): 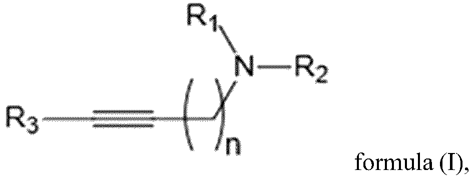 wherein R₁, R₂, and R₃ are respectively substituents with 1 to 6 carbon atoms, 0 to 4 unsaturation, and 0 to 3 heteroatoms; the heteroatoms are selected from at least one of nitrogen or oxygen; and n is 0 to 2; a content of the additive in the lithium-ion battery electrolyte is 0.05 wt% to 3 wt%; and a content of the hydrogen fluoride in the lithium-ion battery electrolyte is 30 ppm to 200 ppm.

## Description

### BACKGROUND OF THE INVENTION

### Field of the Invention

The invention relates to the technical field of power batteries, and in particular to a lithium-ion battery electrolyte and an application thereof.

### Description of Related Art

As total global electric vehicle sales grow exponentially, it is expected that by 2030, electric vehicle sales will account for 30% or more of total vehicle sales. The resulting demand for automotive lithium-ion batteries is almost ten times the current global demand for electric vehicle battery capacity. Based on 2030, it is expected that 89% of battery demand will come from electric vehicles. The research and development direction of lithium-ion batteries will undoubtedly be affected by the performance requirements of electric vehicles.

The rapid commercialization of electric vehicles is mainly hindered by the relatively higher vehicle prices and shorter driving range on a single charge. The bottleneck lies in the high cost and insufficient energy density of electric vehicle battery packs. Currently, the energy density of lithium-ion batteries for electric vehicles needs to be further improved. In order to achieve high energy density performance indicators, attention needs to be paid to the energy density and the cost of nickel-based layered oxide positive electrode active materials. The mainstream trend in the industry is to increase the nickel content in LiNi_{1-x-y}MnₓCo_{y}O₂ (NMC) to improve energy density. However, high-nickel layered oxide positive electrode active materials usually have issues with lattice and surface instability, which may shorten the life of the battery. Many dopants have been proven to effectively alleviate these adverse effects, but different dopants have limited improvement on the high-temperature performance of the battery.

### SUMMARY OF THE INVENTION

The invention provides a lithium-ion battery electrolyte and an application thereof. The lithium-ion battery electrolyte provided by the invention and the application thereof may effectively inhibit the increase of acidity, so that the additive forms a dense CEI film at the interface, and the dissolved transition metal ions are captured on the interface, preventing the transition metal ions from diffusing to the negative electrode and causing internal short circuit due to reduction, thereby improving the safety performance of the battery and improving the performance of the lithium-ion battery in a high-temperature environment.

In order to solve the above technical issues, the invention provides a lithium-ion battery electrolyte, including following components:
a non-aqueous solvent;
a lithium salt; and
an additive, wherein the additive includes a substance represented by a following general formula (I): 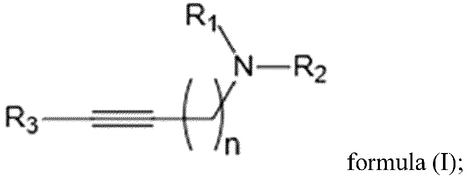
wherein R₁, R₂, and R₃ are respectively substituents with 1 to 6 carbon atoms, 0 to 4 unsaturation degrees, and 0 to 3 heteroatoms; the heteroatoms are selected from at least one of nitrogen or oxygen, and n is 0 to 2; a content of the additive in the electrolyte is 0.05 wt% to 3 wt%;
the electrolyte also includes hydrogen fluoride, and a content of the hydrogen fluoride is 30 ppm to 200 ppm.

In an embodiment of the invention, R₁, R₂, and R₃ are respectively an alkyl group, an alkenyl group, an alkynyl group, or an amino group.

In an embodiment of the invention, a content of the additive in the electrolyte is 0.1 wt% to 0.5 wt%.

In an embodiment of the invention, the substance represented by the general formula (I) includes at least one of following compounds:

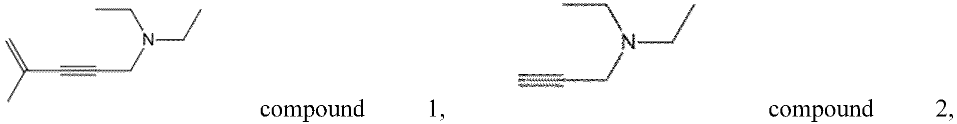

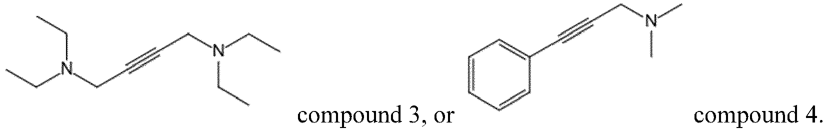

In an embodiment of the invention, the non-aqueous solvent is selected from at least one of carbonate, carboxylate, ether, or nitrile, the carbonate is selected from at least one of ethylene carbonate, propylene carbonate, dimethyl carbonate, ethyl methyl carbonate, diethyl carbonate, or fluoroethylene carbonate, the carboxylate is selected from at least one of ethyl formate, ethyl acetate, propyl acetate, or ethyl propionate, the ether is selected from at least one of 1,2-dimethoxyethane or ethylene glycol diethyl ether, the nitrile is selected from at least one of acetonitrile, propionitrile, butyronitrile, or valeronitrile, and a content of the non-aqueous solvent in the electrolyte is 70 wt% to 85 wt%.

In an embodiment of the invention, the lithium salt is selected from at least one of lithium hexafluorophosphate, lithium bis(fluorosulfonyl)imide, lithium bis(trifluoromethyl)sulfonylimide, lithium acetate, lithium methanesulfonate, and lithium trifluoromethanesulfonate, and a content of the lithium salt in the electrolyte is 12 wt% to 16 wt%.

The invention also provides a lithium-ion battery, including the above lithium-ion battery electrolyte.

In an embodiment of the invention, a positive electrode active material in the lithium-ion battery includes Liₓ[Ni_{y}Co_{z}MnₜM_{(1-y-z-t)}]O_{2-*δ*}), wherein M is selected from at least one of Cr, Zr, Ca, Mg, Cu, Ti, Al, Mo, W or Zn, 0.9<x<1.1, 0.65≤y<1.0, 0≤z<0.5, 0≤t<0.5, and 0≤*δ*≤0.1.

The invention also provides an electrochemical equipment, including the above lithium-ion battery.

Based on the above, the invention proposes a lithium-ion battery electrolyte and an application thereof that may produce acid-base neutralization effect with protons H⁺ to form a Lewis acid-base pair by adding a compound having a specific structure containing both an unsaturated bond and a nitrogen atom into the electrolyte, thereby effectively inhibiting the increase of acidity and preventing the transition metal ions in the positive electrode active material from being replaced. The additive contains an electron-rich unsaturated bond, so that the additive forms an extremely dense CEI film at the interface. The dissolved transition metal ions are captured on the interface, preventing the transition metal ions from diffusing to the negative electrode and causing internal short circuits due to reduction, thereby improving the safety performance of the battery. Therefore, the generation of HF in the battery may be inhibited under a high-temperature working environment, the gas generation issue may be alleviated, and the performance of lithium-ion batteries may be improved under a high-temperature environment.

### DESCRIPTION OF THE EMBODIMENTS

The following describes the embodiments of the invention via specific examples. Those skilled in the art may readily understand other advantages and effects of the invention from the contents disclosed in this specification. The invention may also be implemented or applied via other different specific implementation methods, and each detail in this specification may also be modified or changed in various ways based on different viewpoints and applications without departing from the spirit of the invention.

It should be understood that the invention may be embodied in different forms and should not be construed as limited to the embodiments set forth herein. Rather, these embodiments are provided so that this disclosure will be thorough and complete, and will fully convey the scope of the invention to those skilled in the art.

The technical solution of the invention is further described in detail below in conjunction with embodiments. Obviously, the described embodiments are only a part of the embodiments of the invention, rather than all the embodiments. Based on the embodiments of the invention, all other embodiments obtained by those skilled in the art without any inventive-step effort shall fall within the scope of the invention.

The invention provides a lithium-ion battery. The lithium-ion battery is, for example, a primary battery or a secondary battery. The secondary battery is, for example, a soft-pack battery, a square-shell battery, or a cylindrical battery, etc. The invention does not specifically limit the type of the lithium-ion battery. Here, a square-shell battery is taken as an example to illustrate the specific implementation of the invention. In an embodiment of the invention, a lithium-ion battery includes a housing and a bare cell disposed in the housing, wherein the bare cell includes a positive electrode sheet, a separator, and a negative electrode sheet. The positive electrode sheet, the separator, and the negative electrode sheet are stacked in sequence to ensure that a separator is provided between any positive electrode sheet and any negative electrode sheet. A multilayer laminate body is obtained by winding or laminating and is loaded into a battery housing as a bare cell. Lastly, electrolyte is injected into the housing once or several times to completely immerse the bare cell in the electrolyte.

In an embodiment of the invention, the positive electrode plate includes a positive electrode current collector and a positive electrode active material layer coated on at least one side surface of the positive electrode current collector. In particular, the positive electrode current collector is, for example, a foil formed by surface treatment of nickel, titanium, aluminum, silver, stainless steel, or carbon, etc. In addition to the foil, the positive electrode current collector may also be used in any one or more combinations of various forms such as film, mesh, porous, foam, or non-woven fabric. In particular, the thickness of the positive electrode current collector is, for example, 8 *µ*m to 15 *µ*m. In the present embodiment, the positive electrode current collector is, for example, aluminum foil, and the thickness of the aluminum foil is, for example, 13 *µ*m.

In an embodiment of the invention, the positive electrode active material layer includes, for example, a positive electrode active material, a binder, a conductive agent. In particular, the positive electrode active material may be selected as a high energy density nickel-based layered oxide. In an embodiment of the invention, the positive electrode active material is, for example, Liₓ[Ni_{y}Co_{z}MnₜM_{(1-y-z-t)}]O_{2-*δ*}, wherein M is selected from at least one of Cr, Zr, Ca, Mg, Cu, Ti, Al, Mo, W or Zn, etc., 0.9<x<1.1, 0.65≤y<1.0, 0≤z<0.5, 0≤t<0.5, 0≤*δ*≤0.1, so as to improve the energy density and the cycle life of the lithium-ion battery. The adhesive is, for example, selected from any one or a plurality of, for example, polyvinylidene fluoride (PVDF), polyethylene oxide (PEO), polyamide (PA), polyacrylonitrile (PAN), polyacrylate, polyvinylether, polymethyl methacrylate (PMMA), ethylene-propylene-diene terpolymer (ethylene propylene diene monomer, EPDM), polyhexafluoropropylene, or styrene butadiene rubber (SBR), etc. The conductive agent is, for example, selected from any one or a plurality of conductive carbon black (Super P), acetylene black, carbon nanotubes, graphene, etc.

In an embodiment of the invention, the positive electrode active material is, for example, LiNi_{0.9}Mn_{0.05}Co_{0.05}O₂, the binder is, for example, selected from polyvinylidene fluoride, and the conductive agent is, for example, selected from conductive carbon black. The positive electrode active material, the conductive agent, and the binder are mixed in a mass ratio of (90-98):(1-5):(1-5), and an organic solvent is added. The mixture is stirred in a vacuum stirrer until the system becomes uniform to obtain a positive electrode slurry. In particular, the organic solvent is, for example, selected from N-methylpyrrolidone (NMP). The positive electrode slurry is evenly coated on the aluminum foil, and then transferred to an oven for drying after being dried at room temperature. The positive electrode sheet is obtained via processes such as cold pressing and slitting. In other embodiments, the positive electrode sheet may also be obtained by any other method of forming the positive electrode sheet.

In an embodiment of the invention, the negative electrode plate includes, for example, a negative electrode current collector and a negative electrode active material layer coated on at least one side surface of the negative electrode current collector. The negative electrode current collector is, for example, selected from a copper foil current collector, a composite copper foil current collector, a carbon current collector, a foam copper current collector, a stainless-steel current collector, etc., and the thickness of the negative electrode current collector is, for example, 8 *µ*m to 15 *µ*m. In the present embodiment, the negative electrode current collector is, for example, copper foil, and the thickness of the copper foil is, for example, 13 *µ*m.

In an embodiment of the invention, the negative electrode active material layer includes, for example, a negative electrode active material, a conductive agent, a binder, a thickener. In particular, the negative electrode active material is a compound that may insert and release lithium ions. In an embodiment of the invention, the negative electrode active material includes at least one of graphite, silicon-oxygen material (SiOₓ, 0<x<2), or silicon-carbon material. The adhesive is, for example, selected from any one or a plurality of polyvinylidene fluoride, polyethylene oxide, polyamide, polypropylene, polyacrylate, polyvinyl ether, polymethyl methacrylate, polyhexafluoropropylene, styrene-butadiene rubber, etc. The thickener is, for example, carboxymethyl cellulose sodium (CMC-Na), etc., and the conductive agent is, for example, any one or a plurality selected from conductive carbon black, acetylene black, Ketjen black, carbon nanotubes, graphene, etc.

In an embodiment of the invention, the negative electrode active material is, for example, selected from graphite and silicon-carbon material, and the mass ratio of silicon-carbon material to graphite is, for example, 5:95 to 10:90, the conductive agent is, for example, selected from conductive carbon black, the thickener is, for example, selected from sodium carboxymethyl cellulose, and the binder is, for example, selected from styrene-butadiene rubber. In an embodiment of the invention, the negative electrode active material, the conductive agent, the binder, and the thickener are mixed, for example, in a mass ratio of (90-96):(1-2):(1-3):(2-5), deionized water is added, and the mixture is evenly mixed under the action of a vacuum mixer to obtain a negative electrode slurry. The negative electrode slurry is coated on a copper foil, and then dried at room temperature and transferred to an oven for drying. After processes such as cold pressing and slitting, a negative electrode sheet is obtained. In other embodiments, the negative electrode sheet may also be obtained by any other method of forming the negative electrode sheet.

In an embodiment of the invention, the separator is, for example, a polyethylene film (PE), a polypropylene film (PP), a glass fiber film, or a composite film. The thickness of the separator is, for example, 9 *µ*m to 15 *µ*m.

In an embodiment of the invention, the lithium-ion battery also includes an electrolyte injected into and fills the entire internal space of the battery. The positive electrode plate, the separator, and the negative electrode plate are completely immersed in the electrolyte. The electrolyte plays the roles of, for example, conducting ions, providing ion channels, and maintaining chemical stability. The various components in the electrolyte may be divided into, for example, a non-aqueous solvent, a lithium salt, and an additive according to the functions and the added amounts thereof. The non-aqueous solvent is used to dissolve the lithium salt and the additive; the lithium salt is mainly used to provide lithium ions to form ion channels; in the entire electrochemical system of the battery, the directional movement of lithium ions and electrons generates electricity. The lithium salt has a greater influence on all of, for example, energy density, power density, wide electrochemical window, cycle life, and safety performance of the lithium battery. The additive is a substance added in small amounts to the electrolyte. There are many types of additives and each plays a different role. For example, they may have different improvement effects on all of, for example, high- and low-temperature performance, cycle performance, and film-forming performance of the battery.

The invention provides a lithium-ion battery electrolyte at least including a non-aqueous solvent, a lithium salt, and an additive, wherein the additive includes a substance represented by general formula (I): 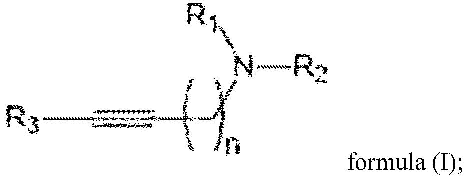 wherein R₁, R₂, and R₃ are respectively substituents having 1 to 6 carbon atoms, 0 to 4 unsaturation degrees, and 0 to 3 heteroatoms, the heteroatoms are, for example, at least one of nitrogen or oxygen, etc., and n is, for example, 0 to 2. In a specific embodiment of the invention, R₁, R₂, and R₃ are respectively substituents such as an alkyl group, an alkenyl group, an alkynyl group, or an amino group. In an acidic environment, proton hydrogen may replace transition metal ions in the positive electrode active material, causing the transition metal ions to dissolve from the positive electrode structure. The further dissolved transition metal ions destroy the cathode-electrolyte interphase (CEI) of the battery. After adding the additive of formula (I) structure, on the one hand, the nitrogen atom in the additive can, as a Lewis base, produce an acid-base neutralization reaction with the proton H⁺ due to the presence of a lone pair of electrons to form a Lewis acid-base pair, thereby effectively inhibiting the increase of acidity and preventing the transition metal ions in the positive electrode active material from being replaced. Moreover, even if a small amount of transition metal ions are dissolved from the positive electrode structure, the additive contains unsaturated bonds. The electron-rich ability of the unsaturated bonds makes the additive form an extremely dense CEI film at the interface, and the transition metal ions are captured at the interface. Therefore, the above may play a comprehensive role in improving the high-temperature performance of the battery and inhibiting acid rise.

In an embodiment of the invention, the substance represented by general formula (I) includes, for example, at least one of 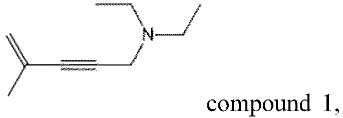 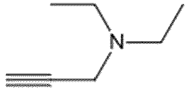 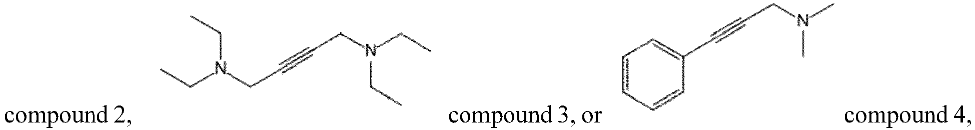 etc. The additive provided in the present application may react with H⁺ and capture transition metal ions that may escape, thereby preventing the dissolution of transition metal ions on the positive electrode side and preventing the transition metal ions from diffusing to the negative electrode and causing internal short circuits due to reduction, thereby improving the safety performance of the battery.

In an embodiment of the invention, the content of the additive in the electrolyte is, for example, 0.05 wt% to 3 wt%, and for example, 0.1 wt% to 0.5 wt%, including endpoint values. When the content of the additive is lower, the neutralizing ability thereof is insufficient to improve the performance of the lithium-ion battery. When the content of the additive is higher, the excess additive readily acts as nucleophilic attacking agents and undergo ring-opening polymerization reactions with cyclic substances in the system, such as ethylene carbonate or fluoroethylene carbonate in a non-aqueous solvent, causing excessive consumption of the non-aqueous solvent and deteriorating the kinetics and the high-temperature performance of the battery. Therefore, the added content is controlled to ensure the improvement of the performance of the lithium-ion battery.

In an embodiment of the invention, the lithium salt is, for example, selected from at least one of lithium hexafluorophosphate (LiPF₆), lithium bis(fluorosulfonyl)imide (LiFSI), lithium bis(trifluoromethyl)sulfonylimide (LiTFSI), lithium acetate, lithium methanesulfonate, and lithium trifluoromethanesulfonate (CF₃SO₃Li), etc., and the content of the lithium salt in the electrolyte is, for example, 12 wt% to 16 wt%. The application does not limit the type of the lithium salt, and a single lithium salt or a mixed lithium salt may be used.

In an embodiment of the invention, the non-aqueous solvent is, for example, selected from at least one of carbonate, carboxylate, ether, or nitrile, etc., wherein the carbonate is selected from at least one of ethylene carbonate (EC), propylene carbonate (PC), dimethyl carbonate (DMC), ethyl methyl carbonate (EMC), diethyl carbonate (DEC), or fluoroethylene carbonate (FEC), etc., the carboxylate is selected from at least one of ethyl formate (EF), ethyl acetate (EA), n-propyl acetate (PA), or ethyl propanoate (EP), etc., the ether is selected from at least one of 1,2-dimethoxyethane (DME) or ethylene glycol diethyl ether, etc., and the nitrile is selected from at least one of acetonitrile (AN), propionitrile (PON), butyronitrile (BN), or valeronitrile (VN). The content of the non-aqueous solvent in the electrolyte is, for example, 70 wt% to 85 wt%. In a specific embodiment of the invention, the non-aqueous solvent is, for example, a mixture of ethylene carbonate and ethyl methyl carbonate. In a specific embodiment of the invention, the non-aqueous solvent is, for example, a mixture of ethylene carbonate, ethyl methyl carbonate, and dimethyl carbonate. In a specific embodiment of the invention, the non-aqueous solvent is, for example, a mixture of ethylene carbonate, ethyl methyl carbonate, and dimethyl carbonate.

In an embodiment of the invention, when preparing the electrolyte, the content of a stable gas such as nitrogen or argon in the glove box is 99.999%, the actual oxygen content in the glove box is less than or equal to 0.1 ppm, and the moisture content is less than or equal to 0.1 ppm. After the non-aqueous solvent is evenly mixed according to the mass ratio, the fully dried lithium salt is added to the non-aqueous solvent, and an additive is added to prepare the non-aqueous electrolyte of the lithium-ion battery. In particular, the contents of the lithium salt and the additive, excluding the non-aqueous solvent, are weight percentages calculated based on the total weight of the electrolyte.

In an embodiment of the invention, during the preparation of the electrolyte, due to factors such as the presence of impurities in the raw materials, such as hydrogen-containing impurities, the electrolyte contains hydrogen fluoride, and in the initial electrolyte, the initial content of the hydrogen fluoride is, for example, 5 ppm to 50 ppm. In an embodiment of the invention, the impurity substance comes from the non-aqueous solvent, for example, and the impurity substance is, for example, at least one of ethylene glycol, ethylene oxide, or glyoxal, etc. In the present embodiment, the type and the content of impurities in the electrolyte are tested by, for example, an equipment such as a gas chromatograph-mass spectrometer (GC-MS). By adding the above additive to the electrolyte, after the battery including the above electrolyte is cycled at 45 °C for a preset number of cycles, the hydrogen fluoride content in the electrolyte is, for example, 30 ppm to 200 ppm, wherein the preset number of cycles is, for example, 10 to 50. By adding an additive having a specific structure of formula (I), the generation of HF in the battery under a high-temperature working environment may be suppressed, the gas generation issue may be alleviated, and the performance of the lithium-ion battery under a high-temperature environment may be improved.

In an embodiment of the invention, the positive electrode sheet, the separator, and the negative electrode sheet are placed in sequence, with the separator being located between the positive electrode sheet and the negative electrode sheet to serve as an isolation, and a bare cell is obtained by winding or stacking. The bare cell is placed in a housing, dried in a vacuum oven, injected with the electrolyte prepared in the present application and sealed, and at least subjected to steps such as leaving to stand, chemical forming, and volume separation to obtain a lithium-ion secondary battery.

Hereinafter, the invention will be explained more specifically by citing Examples, but these Examples should not be construed as limitative. Appropriate modifications may be made within the scope consistent with the gist of the invention, all of which fall within the technical scope of the invention.

### Example 1

Preparation of electrolyte: in an argon glove box with a moisture content of less than 0.1 ppm and an oxygen content of less than 0.1 ppm, ethylene carbonate, ethyl methyl carbonate, and dimethyl carbonate were mixed in a mass ratio of 3:5:2 to obtain a mixed solvent, and then dry lithium hexafluorophosphate and compound 4 were added to the mixed solvent and evenly mixed to obtain an electrolyte. In the resulting electrolyte, the content of lithium salt was 12 wt%, and the content of compound 4 was 0.05 wt%. In the electrolyte, the impurity substance was ethylene glycol, and the initial mixing amount of ethylene glycol was 5 ppm.

Preparation of positive electrode sheet: LiNi_{0.9}Mn_{0.05}Co_{0.05}O₂, polyvinylidene fluoride, and conductive carbon black were mixed in a mass ratio of 98:1:1, N-methylpyrrolidone was added, and the mixture was stirred in a vacuum stirrer until the system was uniform to obtain a positive electrode slurry. The positive electrode slurry was evenly coated on the aluminum foil, and then transferred to an oven for drying after being dried at room temperature. The positive electrode sheet was obtained via processes such as cold pressing and slitting.

Preparation of negative electrode sheet: a negative electrode active material, conductive carbon black, sodium carboxymethyl cellulose, and styrene-butadiene rubber were mixed in a mass ratio of 96:1:1:2. The negative electrode active material was a mixture of silicon-carbon material and graphite. The mass ratio of silicon-carbon material to graphite was 6:94. Deionized water was added and mixed evenly under the action of a vacuum mixer to obtain negative electrode slurry. The negative electrode slurry was coated on the copper foil, and then transferred to an oven for drying after being dried at room temperature. After processes such as cold pressing and slitting, the negative electrode sheet was obtained.

Selection of diaphragm: a 12 *µ*m polyethylene film was selected as the diaphragm.

Preparation of the battery: the positive electrode sheet, the separator, and the negative electrode sheet were stacked in sequence, so that the separator was placed between the positive electrode sheet and the negative electrode sheet to play an isolating role, and the above were stacked to obtain a bare cell. Then, the battery was placed in a housing, dried in a vacuum oven, injected with the electrolyte prepared above, and sealed to form the electrolyte to obtain the lithium-ion secondary battery.

### Example 2

The additive was changed to compound 2, and the other steps were the same as those in Example 1.

### Example 3

The additive was changed to compound 1, and the content of compound 1 was 3 wt%, the impurity substance was ethylene glycol, and the initial mixing amount of ethylene glycol was 50 ppm, and the other steps were the same as those in Example 1.

### Example 4

The additive was changed to compound 2, and the content of compound 2 was 3 wt%, the impurity substance was ethylene glycol, and the initial mixing amount of ethylene glycol was 50 ppm, and the other steps were the same as those in Example 1.

### Example 5

The additive was changed to compound 2, and the content of compound 2 was 0.3 wt%. The impurity substance was ethylene oxide, and the initial mixing amount of ethylene oxide was 20 ppm. The other steps were the same as those in Example 1.

### Example 6

The additive was changed to compound 2, and the content of compound 2 was 0.3 wt%, the impurity substance was ethylene glycol, and the initial mixing amount of ethylene glycol was 20 ppm, and the other steps were the same as those in Example 1.

### Example 7

The additive was changed to compound 2, and the content of compound 2 was 0.1 wt%, the impurity substance was glyoxal, and the initial mixing amount of glyoxal was 20 ppm, and the other steps were the same as those in Example 1.

### Example 8

The additive was changed to compound 2, and the content of compound 2 was 0.5 wt%, the impurity substance was glyoxal, and the initial mixing amount of glyoxal was 20 ppm, and the other steps were the same as those in Example 1.

### Example 9

The additive was changed to compound 2, and the content of compound 2 was 1 wt%, the impurity substance was glyoxal, and the initial mixing amount of glyoxal was 20 ppm, and the other steps were the same as those in Example 1.

### Example 10

The additive was changed to compound 2, and the content of compound 2 was 2 wt%, the impurity substance was glyoxal, and the initial mixing amount of glyoxal was 20 ppm, and the other steps were the same as those in Example 1.

### Comparative example 1

No additive was added, and the other steps were the same as in Example 1.

### Comparative example 2

No additive was added, the impurity substance was ethylene glycol, and the initial mixing amount of ethylene glycol was 200 ppm. The other steps were the same as in Example 1.

### Comparative example 3

The additive was changed to compound 2, and the content of compound 2 was 8 wt%. The other steps were the same as in Example 1.

### Comparative example 4

The additive was changed to 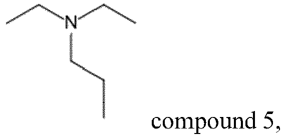 and the content of compound 5 was 0.3 wt%, the impurity substance was ethylene glycol, and the initial mixing amount of ethylene glycol was 20 ppm, and the other operations were the same as those in Example 1.

### Comparative example 5

The additive was changed to compound 6, and the content of 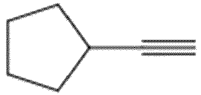 compound 6 was 0.3 wt%, the impurity substance was ethylene glycol, and the initial mixing amount of ethylene glycol was 20 ppm, and the other operations were the same as those in Example 1.

In the invention, different electrolyte ratios were used to prepare lithium-ion batteries in Examples 1 to 10 and Comparative examples 1 to 5, and the performance of the lithium-ion batteries was tested. The test results are shown in Table 1.

In an embodiment of the invention, the high-temperature storage test was to adjust the temperature of the thermostat to 25 °C and place the battery in the thermostat for 2 hours. The battery was charged to 4.25 V at a constant current of 0.33C, then charged to 0.05C at a constant voltage, then left to stand for 30 minutes, and after 2 cycles, the initial battery capacity C₀ was recorded. The temperature of the constant temperature box was adjusted to 60 °C, the battery was left to stand for 30 minutes, stored for 1 month (recorded as 1M in Table 1 below), charged to 4.25 V at a constant current of 0.33C, then charged to 0.05C at a constant voltage, left to stand for 30 minutes, and after 2 cycles, the battery capacity C₁ was recorded again. Capacity recovery rate = C₁/ C₀×100%.

In an embodiment of the invention, the HF content test after the cycle was to adjust the temperature of the thermostat to 45 °C, place the battery in the thermostat for 30 minutes, charge the battery to 4.25 V at a constant current of 1C, and then charge to 0.05C at a constant voltage. After leaving to stand for 10 minutes, the battery was discharged to 2.5 V at a constant current of 1C. After this charge and discharge process was cycled 10 times, the battery was taken out for discharge, disassembled, and the HF content in the electrolyte was tested. After the cycle was completed, in the case of residual electrolyte, the electrolyte in the battery was directly removed. In the case of no residual electrolyte, the battery was protected with aluminum-plastic film and squeezed out with a large press (≥10 MPa). The hydrogen fluoride content was tested by triethylamine titration, and bromomethylphenol blue was used as an indicator during the test.

**Table 1. Performance test results of lithium-ion batteries in Examples 1 to 10 and Comparative examples 1 to 5**

| Group | Additive | Initial mixing amount (ppm) | HF content (ppm) after | 60 °C storage 1M capacity |
|---|---|---|---|---|
| | | | 10 cycles at 45 °C | recovery rate (%) |
| Example 1 | 0.05 wt% compound 4 | Ethylene glycol 5 | 156 | 92.6 |
| Example 2 | 0.05 wt% compound 2 | Ethylene glycol 5 | 140 | 93.2 |
| Example 3 | 3 wt% compound 1 | Ethylene glycol 50 | 183 | 90.1 |
| Example 4 | 3 wt% compound 2 | Ethylene glycol 50 | 172 | 91.3 |
| Example 5 | 0.3 wt% compound 2 | Ethylene oxide 20 | 35 | 94.5 |
| Example 6 | 0.3 wt% compound 2 | Ethylene glycol 20 | 39 | 94.6 |
| Example 7 | 0.1 wt% compound 2 | Glyoxal 20 | 53 | 91.6 |
| Example 8 | 0.5 wt% compound 2 | Glyoxal 20 | 32 | 94.8 |
| Example 9 | 1 wt% compound 2 | Glyoxal 20 | 107 | 93.3 |
| Example 10 | 2 wt% compound 2 | Glyoxal 20 | 136 | 90.4 |
| Comparative example 1 | - | Ethylene glycol 5 | 325 | 80.2 |
| Comparative example 2 | - | Ethylene glycol 200 | 523 | 70.3 |
| Comparative example 3 | 8 wt% compound 2 | Ethylene glycol 5 | 260 | 84.5 |
| Comparative example 4 | 0.3 wt% compound 5 | Ethylene glycol 20 | 212 | 86.2 |
| Comparative example 5 | 0.3 wt% compound 6 | Ethylene glycol 20 | 508 | 72.5 |

As shown in Table 1, by comparing Examples 1 to 10 with Comparative examples 1 to 2, it may be seen that by adding the additive provided by the invention to the electrolyte, the HF content of the lithium-ion battery after high-temperature cycling may be reduced, and the high-temperature storage capacity recovery rate of the lithium-ion battery may be improved, indicating that the additive had better acid inhibition ability and improved the high-temperature performance of the lithium-ion battery. By comparing Examples 1 to 4, it may be seen that the performance of the lithium-ion battery was improved by selecting different additives, but Compound 2 had a better effect on acid inhibition than Compounds 1 and 4, and also had better storage capacity recovery rate. By adding compounds having specific structures containing both unsaturated bonds and nitrogen atoms to the electrolyte, they may complex the transition metal ions of the positive electrode, neutralize the system to produce H⁺, inhibit the increase in acidity, and improve high-temperature performance, but additives of different structures had different effects on improving performance.

Please refer to Table 1. By comparing Examples 5 to 7, it may be seen that even when the acidity in the electrolyte came from different sources, the control compound 2 may still have good acid inhibition ability under the premise of appropriate addition amount, and the storage capacity recovery rate performance was good. Comparative examples 7 to 10 show that when the content of the additive was in the range of 0.05 wt% to 3 wt%, as the content of the additive was increased, after the cycle, the HF content was first decreased and then increased, and the storage capacity recovery was first increased and then decreased. The optimal content range of the additive was 0.1 wt% to 0.5 wt%. Therefore, the content of the additive was controlled to ensure that the comprehensive performance of the lithium-ion battery was optimized.

Please refer to Table 1. By comparing Comparative examples 1 to 3, it may be seen that when the initial mixing amount of the additive and HF was too large, the storage capacity recovery rate of the battery was worse. When substances such as Compound 2 were not added, the acidity was increased sharply after the cycle condition. Although the addition of excessive Compound 2 had a certain inhibitory effect on acid rise, the overall effect was not significant, indicating the initial mixing amount of the additive and HF in the electrolyte needed to be controlled in order to achieve the object of optimizing the performance of the lithium-ion battery. Comparing Example 6 with Comparative examples 4 to 5, when the additive contained only nitrogen atoms, only the increase in acidity may be inhibited, and there was no benefit to the performance of the battery. When the additive contained only unsaturated bonds, not only may the increase in acidity not be inhibited, but electrical performance was worse due to the increase in acidity. Therefore, only in the case of a compound having a specific structure in which the additive contained both unsaturated bonds and nitrogen atoms may the increase in acidity be inhibited and the high-temperature storage performance be improved.

The invention also provides an electrochemical equipment. The electrochemical equipment includes at least one lithium-ion battery above, and the lithium-ion battery is used to provide electrical energy. In particular, the electrochemical equipment may be a vehicle, a mobile phone, a portable device, a laptop, a ship, a spacecraft, an electric toy, and an electric tool, etc. In an embodiment of the invention, the vehicle is, for example, a new energy vehicle. The new energy vehicle may be a pure electric vehicle, a hybrid electric vehicle, or an extended-range vehicle. The spacecraft includes an airplane, a rocket, a space shuttle, and a spacecraft, etc. The electric toy includes a fixed or mobile electric toy, such as a game console, an electric car toy, an electric ship toy, and an electric airplane toy, etc. The power tool includes a metal cutting power tool, a polishing power tool, an assembly power tool, and a railway power tool, such as an electric drill, an electric grinder, an electric wrench, an electric screwdriver, an electric hammer, an impact drill, a concrete vibrator, and an electric planer, etc. The electrochemical equipment includes the above lithium-ion battery, and therefore includes the advantages of the above lithium-ion battery, which are not elaborated in detail here.

Based on the above, the invention proposes a lithium-ion battery electrolyte and an application thereof that may produce acid-base neutralization effect with protons H⁺ to form a Lewis acid-base pair by adding a compound having a specific structure containing both an unsaturated bond and a nitrogen atom into the electrolyte, thereby effectively inhibiting the increase of acidity and preventing the transition metal ions in the positive electrode active material from being replaced. The electron-rich unsaturated bonds in the additive enable the additive to form an extremely dense CEI film at the interface. The dissolved transition metal ions are captured on the interface, which may play a comprehensive role in improving the high-temperature performance of the battery and inhibiting acid rise. The above may inhibit the generation of HF in the battery under a high-temperature working environment, alleviate the gas generation issue, and improve the performance of the lithium-ion battery under a high-temperature environment, and may prevent the dissolution of transition metal ions on the positive electrode side, prevent the transition metal ions from diffusing to the negative electrode and causing internal short circuit due to reduction, and improve the safety performance of the battery.

The above description is only a preferred embodiment of the present application and an explanation of the technical principles used. Those skilled in the art should understand that the scope of the invention involved in the present application is not limited to the technical solution formed by a specific combination of the above technical features, but should also cover other technical solutions formed by any combination of the above technical features or their equivalent features without departing from the inventive concept, such as a technical solution formed by replacing the above features with (but not limited to) technical features having similar functions disclosed in the present application.

Except for the technical features described in the specification, the remaining technical features are known techniques to those skilled in the art. In order to highlight the innovative features of the invention, the remaining technical features are not described here in detail.

## Claims

1. A lithium-ion battery electrolyte, comprising at least following components:
a non-aqueous solvent;
a lithium salt;
an additive; and
hydrogen fluoride,
wherein the additive comprises a substance represented by a following general formula (I): 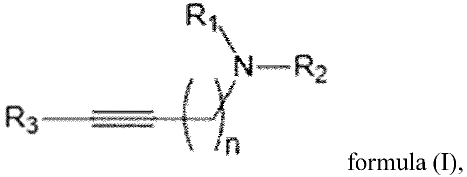
wherein R₁, R₂, and R₃ are respectively substituents with 1 to 6 carbon atoms, 0 to 4 unsaturation degrees, and 0 to 3 heteroatoms; the heteroatoms are selected from at least one of nitrogen or oxygen; and n is 0 to 2;
a content of the additive in the lithium-ion battery electrolyte is 0.05 wt% to 3 wt%; and
a content of the hydrogen fluoride in the lithium-ion battery electrolyte is 30 ppm to 200 ppm.

2. The lithium-ion battery electrolyte according to claim 1, wherein R₁, R₂, and R₃ are respectively an alkyl group, an alkenyl group, an alkynyl group, or an amino group.

3. The lithium-ion battery electrolyte according to claim 1, wherein the content of the additive in the lithium-ion battery electrolyte is 0.1 wt% to 0.5 wt%.

4. The lithium-ion battery electrolyte according to claim 1, wherein the substance represented by the general formula (I) comprises at least one of following compounds:

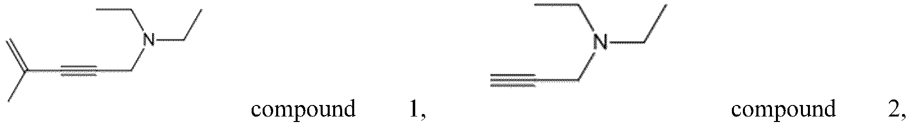

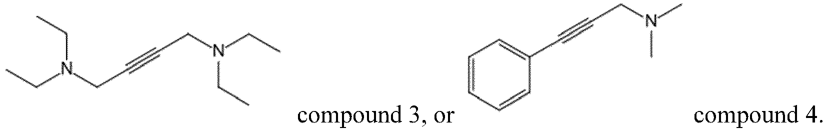

5. The lithium-ion battery electrolyte according to claim 1, wherein the non-aqueous solvent is selected from at least one of carbonate, carboxylate, ether, or nitrile, the carbonate is selected from at least one of ethylene carbonate, propylene carbonate, dimethyl carbonate, ethyl methyl carbonate, diethyl carbonate, or fluoroethylene carbonate, the carboxylate is selected from at least one of ethyl formate, ethyl acetate, propyl acetate, or ethyl propionate, the ether is selected from at least one of 1,2-dimethoxyethane or ethylene glycol diethyl ether, the nitrile is selected from at least one of acetonitrile, propionitrile, butyronitrile, or valeronitrile, and a content of the non-aqueous solvent in the lithium-ion battery electrolyte is 70 wt% to 85 wt%.

6. The lithium-ion battery electrolyte according to claim 1, wherein the lithium salt is selected from at least one of lithium hexafluorophosphate, lithium bis(fluorosulfonyl)imide, lithium bis(trifluoromethyl)sulfonylimide, lithium acetate, lithium methanesulfonate, and lithium trifluoromethanesulfonate, and a content of the lithium salt in the lithium-ion battery electrolyte is 12 wt% to 16 wt%.

7. A lithium-ion battery, comprising the lithium-ion battery electrolyte according to any one of claims 1 to 6.

8. The lithium-ion battery according to claim 7, wherein a positive electrode active material in the lithium-ion battery comprises Liₓ[Ni_{y}Co_{z}MnₜM_{(1-y-z-t)}]O_{2-*δ*}), wherein M is selected from at least one of Cr, Zr, Ca, Mg, Cu, Ti, Al, Mo, W or Zn, 0.9<x<1.1, 0.65≤y<1.0, 0≤z<0.5, 0≤t<0.5, and 0≤δ≤0.1.

9. An electrochemical equipment, comprising the lithium-ion battery according to claim 7 or claim 8.
